# EUROPEAN PATENT APPLICATION

(11) **EP 4 588 826 A1**
(43) Date of publication of application: **23.07.2025**
(21) Application number: 24153025.2
(22) Date of filing: 22.01.2024
(51) Int. Cl.: B65G 1/04

(54) **GATE ARRANGEMENT**

(71) Applicant: AUTOSTORE TECHNOLOGY AS, 5578 Nedre Vats (NO)
(72) Inventor: STRØMME, Erik, 5578 Nedre Vats (NO)
(74) Representative: Kilburn & Strode LLP

(57) **Abstract**

The disclosure relates to a gate arrangement for controlling passage of a robotic container-handling vehicle between a first area and a second area, wherein the gate is configured to move between a first position and a second position when the gate arrangement is arranged in between the first area and the second area. The gate arrangement comprises an internal space for accommodating a robotic container-handling vehicle, a first barrier configured to obstruct passage of a robotic container-handling vehicle between the internal space and the first area when the gate arrangement is arranged in the second position, and a second barrier configured to prevent passage of a robotic container-handling vehicle between internal space and the second area when the gate arrangement is arranged in the first position. The first and second barrier are rigidly connected so as to form a rigid body

## Description

### TECHNICAL FIELD

The disclosure relates to a gate arrangement. More particularly, it relates to a gate arrangement and system comprising the same for controlling passage of a robotic container-handling vehicle between a first area and a second area of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robots need servicing - at the periphery on the same level as the rail system there may be a mezzanine where human or robotic operators can service and maintain the robotic vehicles at a location that is safely away from the rest of the system (where other robots travelling across the rail system picking from the bins).

To meet safety requirements, the service area may be separated from the main rail system on top of the grid, so that robots being serviced are away from and not at risk of colliding or otherwise interfering with the robots on the grid. [one known solution for separating the service and grid area involves two shutters) In previous systems, a gate system has been used to separate the service area from the grid area. [insert prior art reference here] describes a gate comprising two vertically moving shutters, one on a service area side and one on a grid side. At any one time, at least one of the shutters may be closed thereby preventing a malfunctioning robot from travelling directly from the grid area into the service area (where human operators or other equipment resides). In particular, as one shutter closes, the other moves in the opposite direction. Such known solutions involve multiple moving parts to facilitate the oppositely-vertical movement of the two shutters.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a perspective view of a gate arrangement according to an embodiment of the present disclosure;

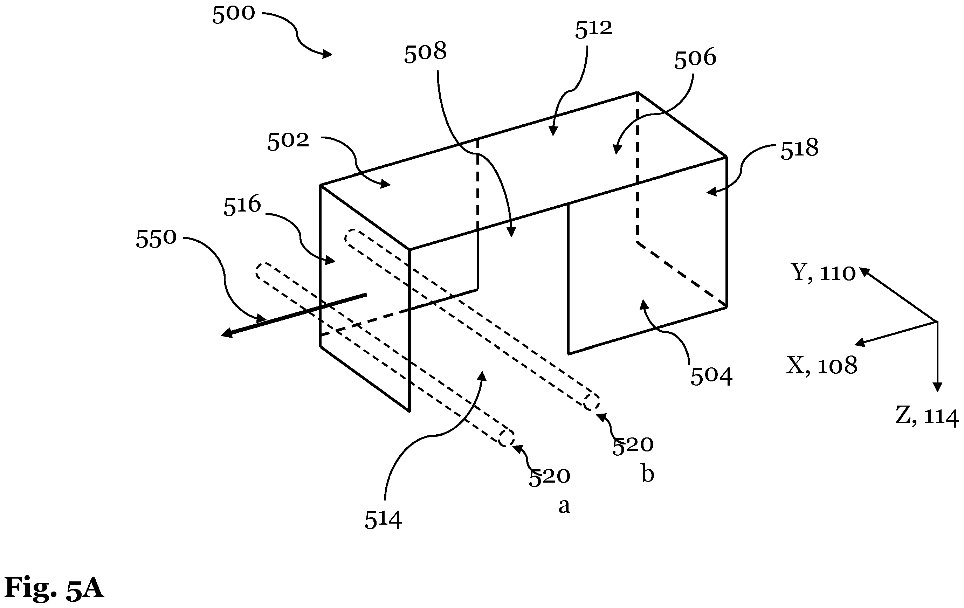

Fig 5A shows a perspective view of an alternative gate arrangement according to an embodiment of the present disclosure;

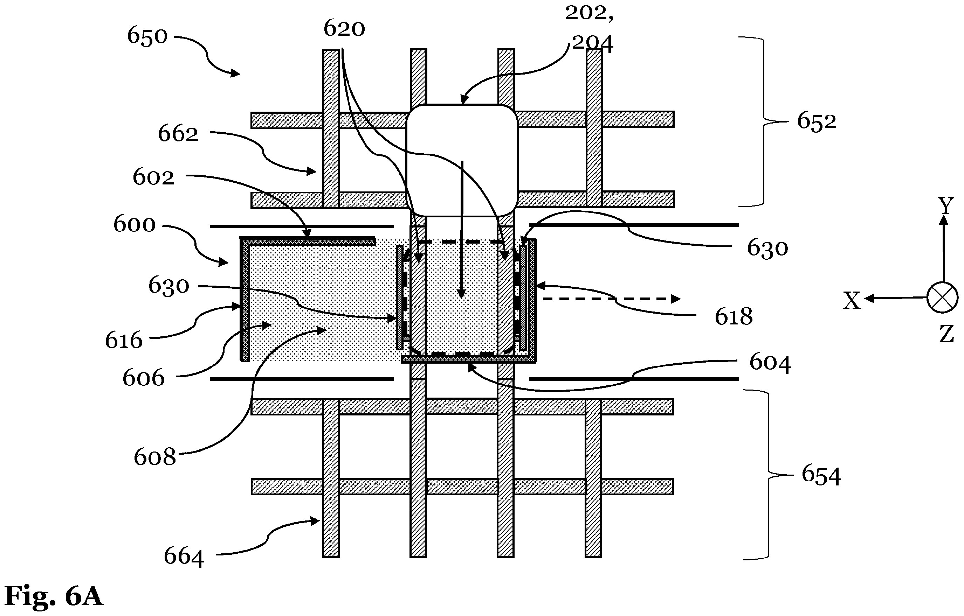

Fig. 6A shows a plan view a system according to an embodiment of the present disclosure;

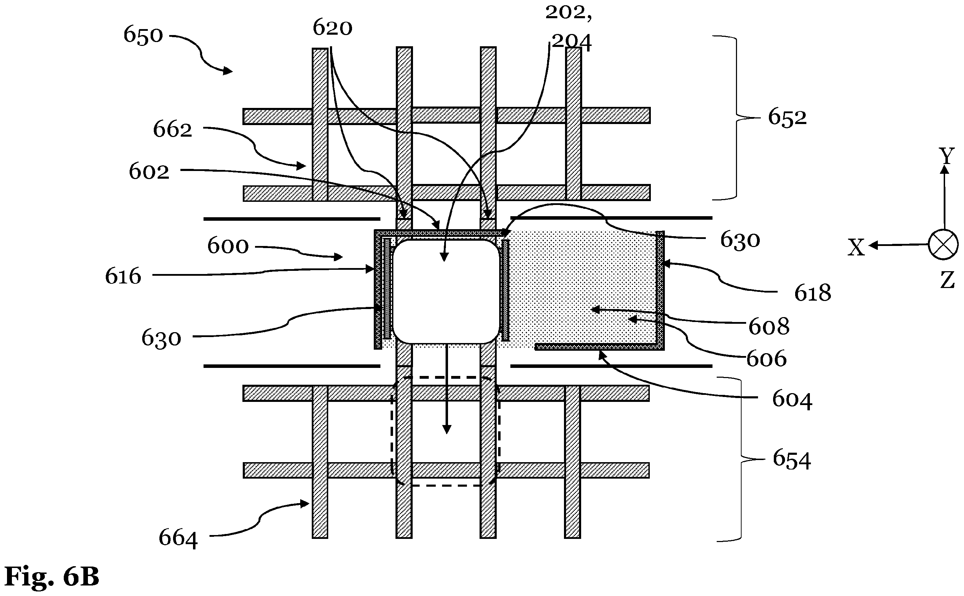

Fig. 6B shows an alternative plan view of the system of Fig. 6A;

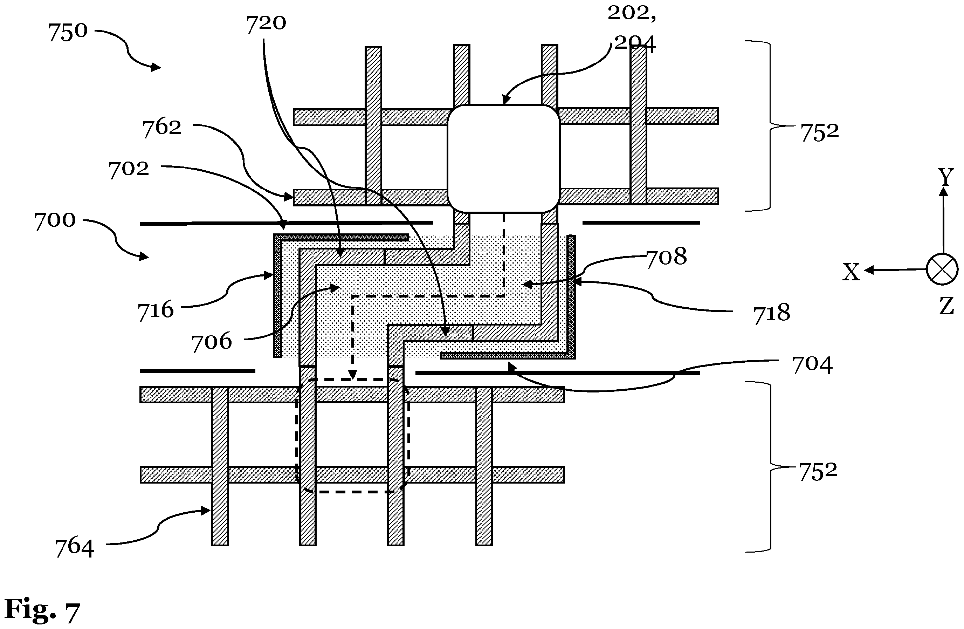

Fig. 7 shows a plan view of a system according to an alternative embodiment; and

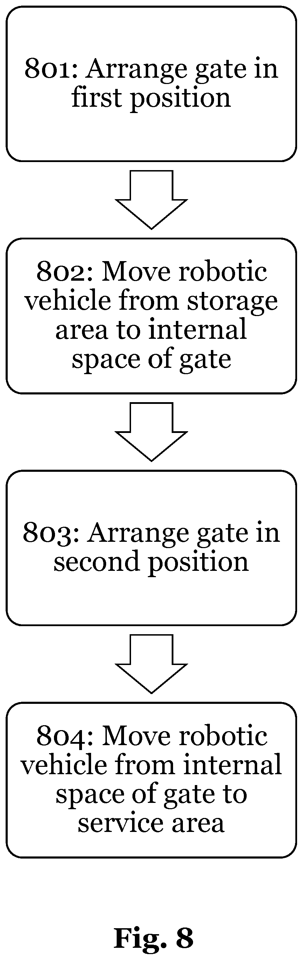

Fig. 8 is a flowchart of a method for controlling passage of a robotic vehicle according to the present disclosure.

### DETAILED DESCRIPTION

In overview, the disclosure relates to a gate arrangement (hereinafter called a gate) for controlling passage of a robotic container-handling vehicle (hereinafter called a robotic vehicle) between a first area and a second area. The gate comprises an internal space for accommodation a robotic vehicle is configured to move in a generally horizontal direction between a first position and a second position. In the first position, the gate arrangement allows passage of a robotic vehicle between the first area and the internal space. In the second position, the gate arrangement allows passage of a robotic vehicle between the second area and the internal space.

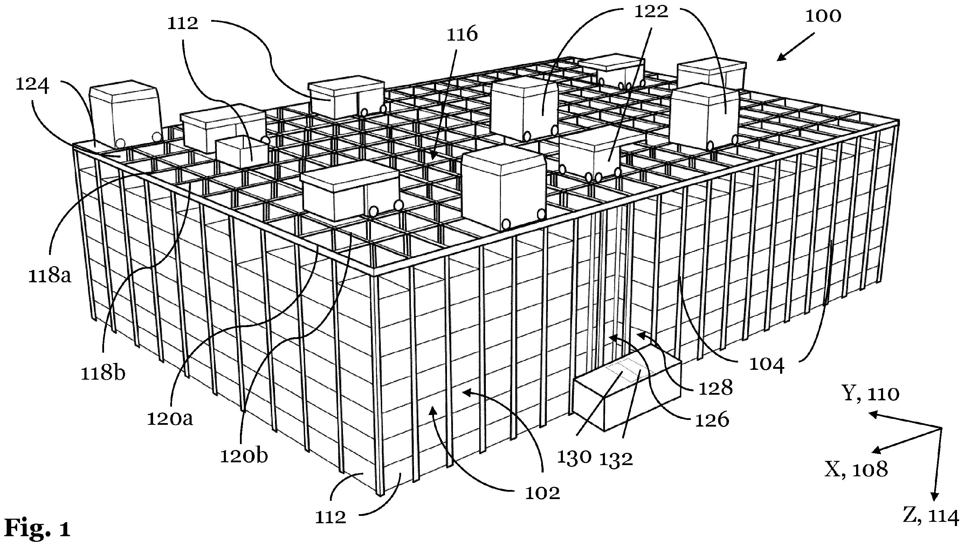

The first area maybe a grid comprising a rail system, such as a grid and rail system as described below in relation to Fig. 1. The second area may be a service area for the robotic vehicles, and the first and second areas may each have respective rail systems that are connected by a connecting rail system. The robotic vehicles can travel between the first area and second area via the connecting rail system. For example, the robotic vehicles may travel from the first area (e.g. a grid area) to the second area (e.g. a servicing area) when the robotic vehicles need servicing or maintenance. A according to the present disclosure may be arranged in between the first and second area and is positioned relative to the connecting rail system to control passage of robotic vehicles over the connecting rail system between the first and second areas.

The gate comprises an internal space for accommodating a robotic vehicle whilst the robotic vehicle is travelling between the first and the second area. As described in more detail below, in operation, a robotic vehicle travels into the internal space of the gate (e.g. from the first area) before travelling out of the internal space (e.g. into the second area). In between a time that the robotic vehicle travels into and out of the internal space, the gate moves from a first position to a second position to allow the robotic vehicle located within the internal space to travel along the connecting rail system and into the second area.

In more detail, the gate comprises first and second barriers that are configured to obstruct passage of the robotic vehicle depending on whether the gate is arranged in a first position or in a second position. When the gate is located in between the first and second areas, it is configured to move in a generally horizontal direction in between the first and second positions. The first and second barriers are relatively arranged such that, when the gate is in the first position, a path of travel of the robotic vehicle between the first area and the internal space is not obstructed (allowing a robotic vehicle to move freely between the first area and the internal space) by the first barrier, but a path of travel of the robotic vehicle between the second area and the internal space is obstructed by the second barrier. In the second position, a path of travel of the robotic vehicle between the second area and the internal space is not obstructed (allowing a robotic vehicle to move freely between the second area and the internal space) by the second barrier, but a path of travel of the robotic vehicle between the second area and the internal space is obstructed by the first barrier.

In other words, the first barrier is configured to obstruct passage of a robotic container-handling vehicle between the internal space and the first area when the gate arrangement is arranged in the second position, and the second barrier configured to prevent passage of a robotic container-handling vehicle between internal space and the second area when the gate arrangement is arranged in the first position. In all positions of the gate arrangement, (either the first position, second position, or any intermediate position therebetween), at least one of: the path of travel between the first area and the internal space; and the path of travel between the second area and the internal space may be at least partially obstructed by at least one of the barriers. This means that at any time, the gate prevents a robotic vehicle from freely travelling between the first area and second area via the connected rail system. In other words, the presence of a gate arrangement according to the present disclosure means that a gate must move horizontally between the first position and the second position in order to allow a robotic vehicle to pass between the first and second areas. In this way, the gate acts as a safety provision to prevent a malfunctioning robotic vehicle from travelling directly from a grid area to a service area (where human service operators may reside), which could otherwise potentially cause harm to those human operators, or otherwise damage the robotic vehicles or other equipment located in the service area. In addition, a horizontally-moving gate arrangement reduces the vertical space requirements that are otherwise required by conventional gate arrangements. According to the present disclosure, a gate arrangement is configured to move horizontally between a first position and a second position, thus making use of horizontal space that already exists in the first place due to the rail system of the grid. In other words, as described below and with reference to Fig. 1, a grid comprises a rail system that extends in a horizontal (i.e. X-Y) plane to facilitate movement of robotic vehicles atop the grid in the X or Y direction. As such, a gate arrangement controlling passage between the grid and a service area that moves in a horizontal (i.e. X or Y) direction reduces additional space requirements relative to known solutions which require a vertically (i.e. +/-Z) moving gate. A reduction in the vertical height requirements results in either a lower ceiling height, thus occupying less space, or enables more levels to be included in the grid, thus increasing the grid's storage capacity.

The first and second barrier of the gate arrangement are rigidly connected so as to form a single rigid body. In some embodiments, the gate arrangement comprises a connecting portion between the first and second barrier. The first and second barriers are each rigidly connected to opposite sides of the connecting portion so as to form the single rigid body comprising the first barrier, second barrier and the connection portion. When the gate is positioned in place in between the first and second areas, the connecting portion maybe located at a top side of the gate (i.e. facing vertically upwards in the -Z direction), meaning that the connecting portion is located at the top of the first and second barriers and is located above the internal space and connecting rail system. The connecting portion may be considered to be a roof over the internal space. In addition to this connecting portion, otherwise known as a primary connecting portion, the gate may further comprise a secondary connecting portion also connected between the first and second barriers. The barriers, primary connecting portion and secondary connecting portion may form single rigid body. When the gate is positioned in place in between the first and second areas, the secondary connecting portion may be located at a bottom side of the gate (i.e. facing vertically downwards in the +Z direction), such that the connecting portion is located at the bottom of the first and second barriers and is located beneath the connecting rail system.

Reference is made herein to a gate arrangement comprising first and second barriers forming a single rigid body. In particular, the first and second barriers of the gate arrangements of the present disclosure are rigidly connected so as to form a single rigid body. This means that, as the gate moves between the first and second position, the relative positions of the first and second barriers (i.e. the position of one barrier with respect to the other) remains constant, i.e. unchanged. In other words, the first and second barriers are fixed in place relative to one another. In other words, when the gate arrangement is caused to move, the first and second barriers move as a single body in the same direction and by the same amount.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

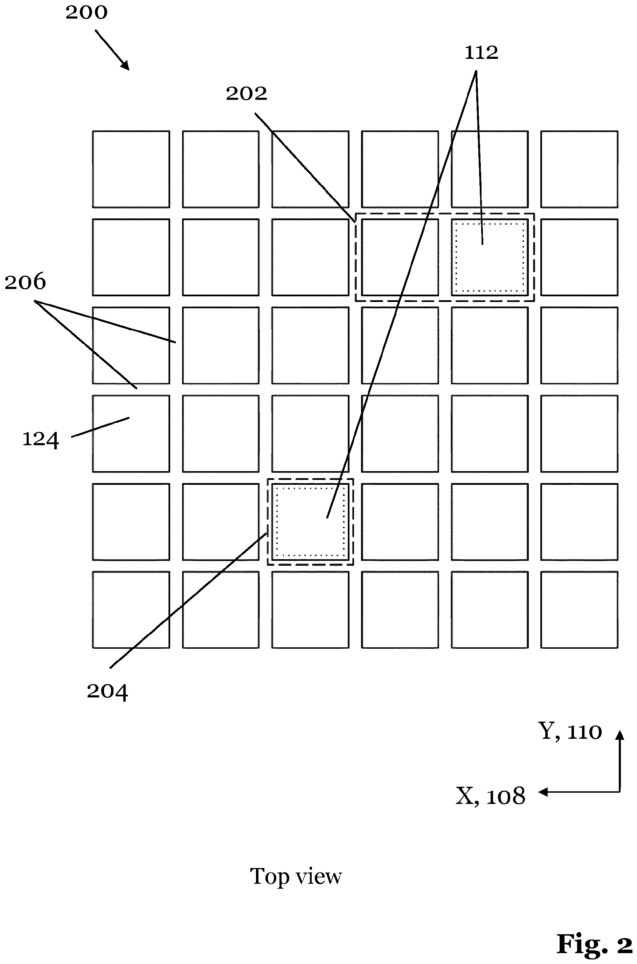

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

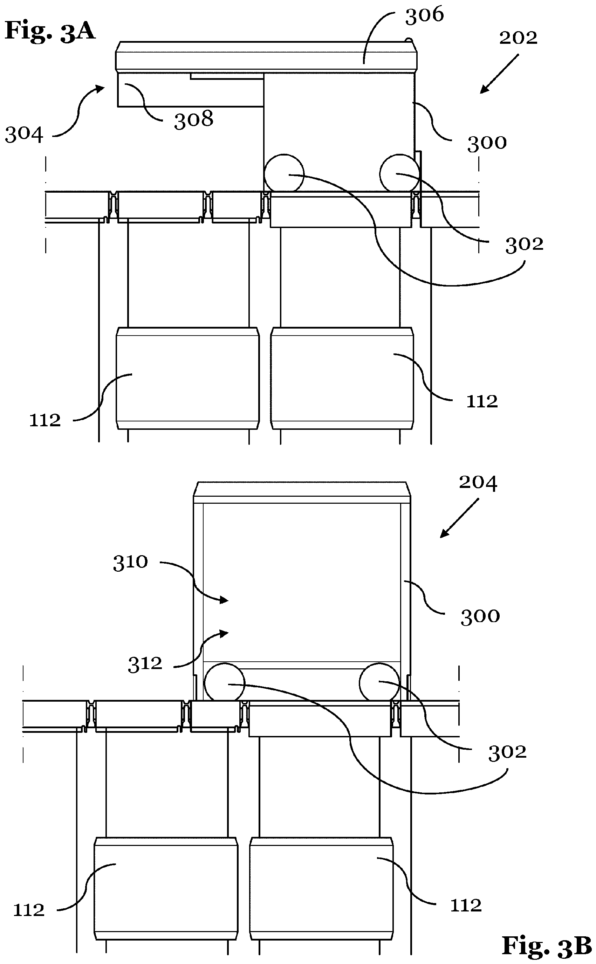

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

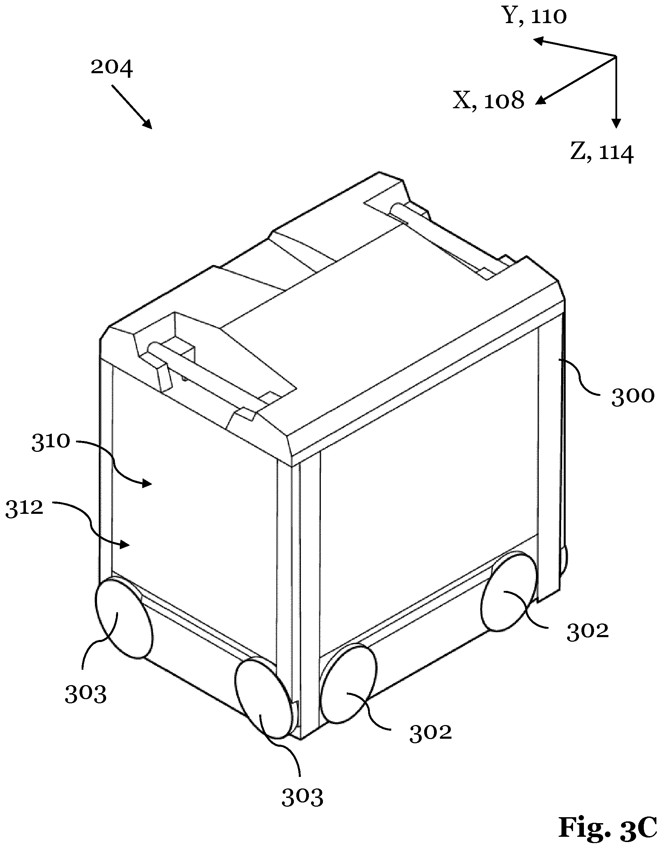

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

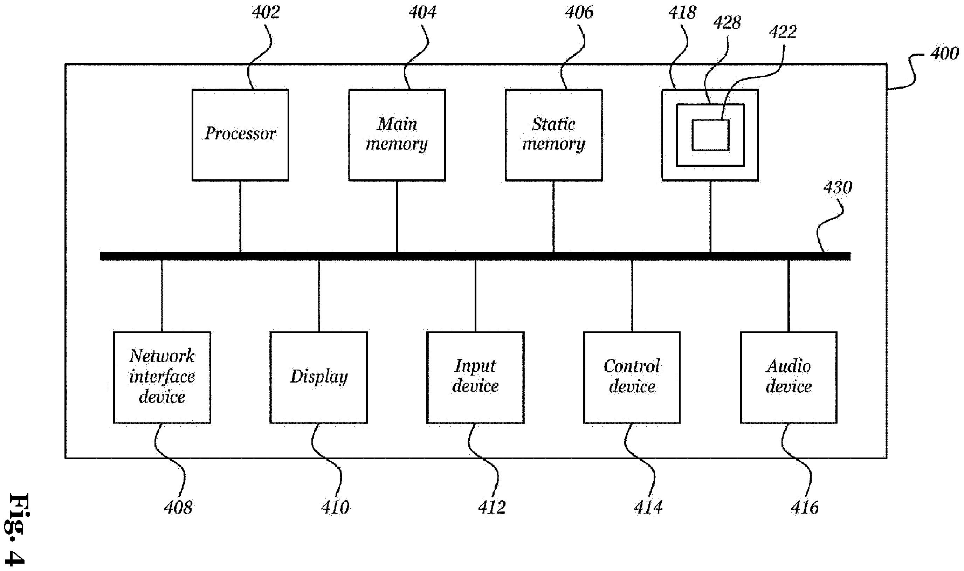

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Robotic vehicle servicing area

In addition to the grid 100, an automated storage and retrieval system may additionally comprise a separate service area for servicing robotic vehicles that operate on the grid 100. The service area may be appended to one or more sides of the grid structure, such that robotics can travel across the rail system 116 of the grid 100 to the service area. purpose of the service area. In more detail, the service area may be located on a mezzanine that is substantially at the same level as the rail system 116 on top of the grid 100. The service area may have its own rail system, which is connected to the rail system 116 of the grid 100 such that robotic vehicles in need of servicing can travel from the grid to the service area.

The service area may be accessible by servicing personnel that carry out servicing, maintenance, repair, or other tasks, on the robotic vehicles. Once the robotic vehicles have been serviced/repaired/are ready to perform their intended function, they may return to the grid 100 via a connecting rail system that connects the rail system 116 with the rail system of the service area. To prevent access to the grid by the servicing personnel, or more generally to prevent unwanted access to the grid, passage between the grid area and the service area may be controlled by a gate as described herein. The gate is designed to only allow a robotic vehicle to pass between the grid area and the service area, and is designed such that at all times, direct access from the service area to the grid is obstructed. Embodiments of gate arrangements are described in more detail below with reference to Figs. 5A, 5B, 6A, 6B and 7.

### Gate arrangement structure

Referring to in Fig. 5A, a gate arrangement 500 according to an embodiment of the present disclosure is shown in a perspective view. The gate arrangement, or gate, 500, comprises a first barrier 502 (on a side facing in the +Y direction in the figure), a second barrier 504 (on a side facing in the -Y direction), and a connecting portion 506 (facing in the -Z direction) to which the first barrier 502 and second barrier 504 are rigidly connected. The barriers 502, 504 and connecting portion 506 may each be made of sheet metal, such as aluminium or stainless steel for example and may be welded together to form the rigid connection between the connecting portion 506 and each of the barriers 502 and 504. Alternatively, the barriers 502, 504 and connecting portion may be fixed together by fasteners such as screws, nuts and bolts or the like. In general, any suitable means for rigidly connecting the barriers 502, 504 to the connecting portion may be used. Alternatively, the first barrier 502, second barrier 504 and connecting portion 506 may be integrally formed.

Adjacent to each barrier 502, 504 is a corresponding opening 512, 514 into an internal space 508 of the gate 500. In more detail, the gate 500 comprises a first opening 512 located adjacent to the first barrier 502, and a second opening 514 located adjacent to the second opening. The internal space 508 is configured to accommodate a robotic vehicle, such as a robotic container-handling vehicle 202, 204 as shown in Figs. 3A - 3C. The first and second openings 512, 514 are provided to allow passage of a robotic vehicle 202, 204 into and out of the internal space 508.

The internal space is sized to be able to accommodate a robotic vehicle, meaning that the height (in the Z direction) and depth of the internal space (in the Y direction) must be larger than corresponding dimensions of a single robotic vehicle (202, 204) that enters the internal space via the first or second openings 512, 514. In some examples, the height and depth of the internal space may be only very slightly larger than the corresponding dimensions of the robotic vehicle it is designed to accommodate, such that no other object or body is able to enter the internal space 508 when a robotic vehicle is contained within the internal space. For example the height and/or depth of the internal space 508 maybe 100 mm greater than the corresponding height and/or depth of a robotic vehicle 202, 204, optionally 50 mm, greater, optionally 10 mm greater and preferably 5 mm greater than the corresponding height and/or depth of a robotic vehicle 202, 204. Preferably, the height and/or depth of the internal space are minimised to be as close to the corresponding height and depth of a robotic vehicle 202, 204. This helps to prevent unwanted objects from entering the internal space 508 when a robotic vehicle is located in the internal space.

The height and/or depth of the internal space 508 of the gate 500 may correspond (in the sense described above) to the height and/or depth of a robotic vehicle 202, 204 that the internal space can accommodate. However, the width (in the X direction) of the internal space 508 may be considerably larger (e.g. more than 100 mm larger, optionally more than 200 mm larger, optionally more than 500 mm larger, preferably at least two times larger) than the corresponding dimension (width along the X direction) of the robotic vehicle. As described in more detail below, the gate 500 is configured to move horizontally, in the X direction, between a first position and a second position. In order to accommodate the robotic vehicle within the internal space 508, which remains stationary whilst the gate 500 moves, the width of the gate arrangement must be greater than a sum of the width of the robotic vehicle and the extent of travel between the first position and the second position. For example, if the width in the X direction of a robotic vehicle that is to be accommodated in the internal space 508 is 1 meter, and the extent of travel, i.e. the displacement, between the first and the second positions is also 1 meter, then the width of the internal space in the X direction must be greater than 2 meters in order to accommodate the robotic vehicle at the first position, second position, or any intermediate position.

The width of the internal space 508 maybe 100 mm greater than the sum of the width of the robotic vehicle and the extent of travel between the first position and the second position, optionally 50 mm, greater, optionally 10 mm greater and preferably 5 mm greater than the sum of the width of the robotic vehicle and the extent of travel between the first position and the second position. Preferably, the width of the internal space is minimised to prevent unwanted objects from entering the internal space 508 when a robotic vehicle is located in the internal space.

As described in more detail below, the gate 500 may be used in an automated storage and retrieval system to control passage of a robotic vehicle 202, 204 between a first area of the system, such as a grid and storage area, and a second area of the system, such as a service and/or maintenance area. In more detail, the gate 500 is capable of being arranged in between the first and second areas of the system, proximate to a connecting rail system that connects the first and second areas, such that the gate 500 can control passage of a robotic vehicle 202, 204 over the connecting rail system between the first and second areas. This is done by controlling the gate to move between a first position, in which passage between the first area to the internal space unobstructed, and a second position, in which passage between the second area and the internal space is unobstructed. In the first position, passage between the internal space and the second area is at least partially obstructed by the second barrier 504. In the second position, passage between the internal space and the first area is at least partially obstructed by the first barrier 502. The relative arrangement and operation of the gate 500 with the first and second areas and connecting rail system is illustrated in Figs. 6A and 6B and is described in more detail below.

When the gate 500 is arranged in situ in between the first area and the second area, a first side of the gate arrangement (along which the first barrier 502 and first opening 512 are located) generally faces towards the first area. Opposite to the first side, a second side (along which the second barrier 504 and second opening 514 are arranged) generally faces towards the second area. The first barrier 502 and the first opening 512 arranged on the first side can therefore be used to control passage of a robotic vehicle 202, 204 between the first area and the internal space 508. Similarly, the second barrier 504 and the second opening 514 can be used to control passage of a robotic vehicle 504, 514 between the second area and the internal space 508. In addition to the first and second sides, the gate 500 may further comprise lateral sides 516 and 518 that face generally in the direction of movement (in the figure, the first lateral side 516 face generally in the +X, direction and the second lateral side 518 faces generally in the - X direction). The lateral sides may be integrally formed with the barriers 502, 504 and/or the connecting portion. For example, the first and second barriers 502, 504, connecting portion 506 and lateral sides 516, 518 may be integrally formed so as to form a rigid body. Alternatively, the lateral sides may be connected to the barriers and/or connecting portion 506 using suitable means such as fasteners or welding.

For ease of reference, Fig. 5A further illustrates a connecting rail system 520 comprising a pair of rails 520a and 520b, which may not be part of the gate arrangement 500 itself, but illustrated in Fig. 5A for the purposes of being a visual aid. To connecting rail system 520 is shown as dashed lines to indicate that it is not part of the gate arrangement 500. The connecting rail system may be connected between a first rail system of a first area (not shown in Fig. 5a) and a second rail system of a second area (also not shown), thereby facilitating passage of a robotic vehicle between the two areas. The connecting rail system 520 is located proximate to but beneath the gate 500 such that the gate is configured to control passage of a robotic vehicle 202, 204.

In more detail, the first barrier is configured to obstruct a path defined by the rails 520a, 520b between the first area and the internal space when the gate is arranged in the second position (which is as shown in Fig. 5A), whilst at the same time the second opening 514 is located over the connecting rail system 520 when the gate is arranged in the second position, thereby freely allowing passage between the second area and the internal space 508. Conversely, when the gate is arranged in the first position (the gate moves in the +X direction as indicated by arrow 550) the second barrier is configured to obstruct a path defined by the rails 520a, 520b between the second area and the internal space, whilst at the same time the first opening 512 is located over the connecting rail system 520, thereby freely allowing passage between the first area and the internal space 508.

The relative arrangement of the two barriers 502 and 504 may be described as offset along the direction in which the gate arrangement is configured to move (i.e. along the X direction). Similarly, the relative arrangement of the two openings 512 and 514 may also be described as offset along the same direction. The offset of the barriers 502, 504 in this direction (the direction of movement of the gate) enables the gate to at least partially obstruct a path defined by the connecting rail system between the first and second area at all times. That is, whilst it is possible for a robotic vehicle to pass through the gate and between the first and second areas, the offset of the barriers 502, 504 leads to at least a partial obstruction on at least one of the sides of the gate, so that a robotic vehicle cannot pass directly through the gate 500 without the gate switching between the first and second positions. In other words, the offset necessitates that a robotic vehicle enters the internal space 508 from the first area whilst the gate 500 is arranged in the first position. The robotic can then only leave the internal space 508 to enter the second area after the gate has moved to the second position. In the opposite direction, the offset necessitates that a robotic vehicle enters the internal space 508 from the second area whilst the gate 500 is arranged in the second position. The robotic can then only leave the internal space 508 to enter the first area after the gate has moved to the first position. In this way, a gate arrangement is provided that prevents a robotic vehicle from travelling freely between the first and second areas, thereby preventing risk of damage or injury to personnel or equipment in either area in the event of a malfunctioning robotic vehicle or a robotic vehicle that has lost control.

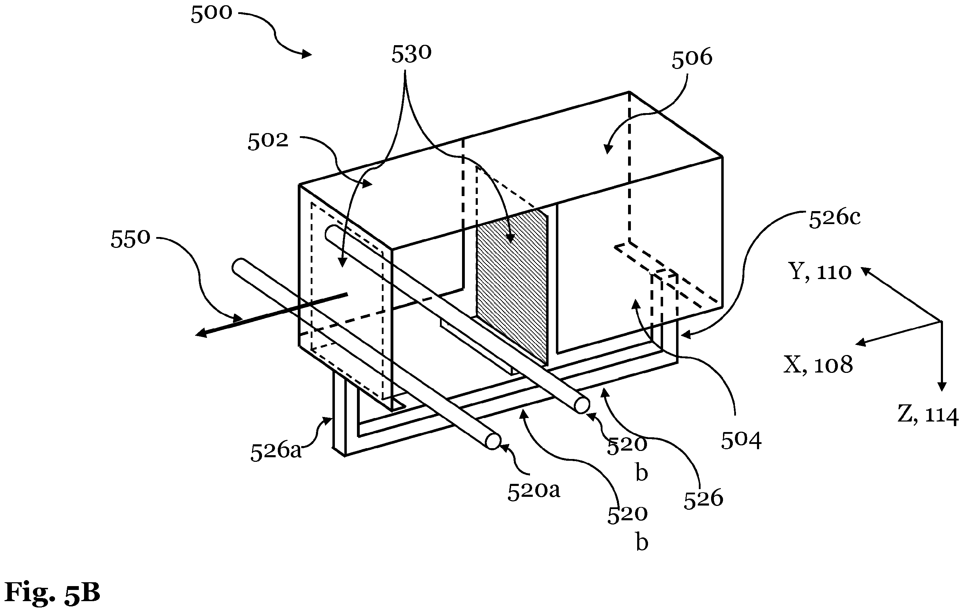

Referring to Fig. 5B, a gate arrangement 500 according to an alternative embodiment of the present disclosure is shown in a perspective view. The gate arrangement, or gate, 500, comprises all the same features of the gate arrangement depicted in Fig. 5A, although some reference numerals have been omitted from the figure for simplicity. The gate 500 is shown arranged relative to a connecting rail system 520 comprising rails 520a and 520b which guide a robotic vehicle 202, 204 between a first area and a second area of an automated storage and retrieval system. As with the gate 500 shown in Fig. 5A, gate 500 of Fig. 5B is shown arranged in the second position, meaning that the first barrier 502 is obstructing a robotic vehicle path between the internal space 508 and the first area, whilst the vehicle path between the internal space and the second area is unobstructed.

In addition to the top connecting portion 506 connected between the first barrier 502, second barrier 504, and lateral sides 516, 518, the gate 500 depicted in Fig. 5B further comprises a secondary connecting portion 526. In the example shown, the secondary connecting portion 526 is connected between the first and second lateral sides 516, 518, however in other examples the secondary connecting portion 526 may be connected directly between the first and second barrier or between other components of the gate 500. In the example shown, the secondary connecting portion 526 is located generally beneath the connecting rail system 520 and takes the form of a bar 526 that is rigidly connected to the rest of the components of the gate 500 (e.g. by fastening, welding or by being integrally formed with the other components of the gate). The bar 526 serves to provide additional structural strength and rigidity to the gate arrangement, thereby reducing damage to the gate in the event of a collision between the gate (e.g. the barriers 502, 504) and a robotic vehicle 202, 204. In the particular embodiment shown, the bar 526 comprises end portions 526a, 526c which are bent at right angles to a central portion 526b. The end portions are connected to respective sides of the rest of the gate 500, whilst the central portion extends beneath the connecting rails 520a, 520b in between the two end portions. The portions 526a, 526b, 526c may be integrally formed or otherwise rigidly connected, so as to provide additional structural rigidity to the gate 500. In alternative embodiments, the secondary connecting portion may be any suitable means arranged generally underneath the connecting rail system 520a, 520b that provides additional structural rigidity to the rest of the components of the gate arrangement 500.

In some embodiments, the gate arrangement may further comprise supporting rails (not shown in the figure) configured to support a base of the first and second barriers. The supporting rails may be fixed in place relative to the first and second area, such that the gate arrangement moves relative to the supporting rails when moving between the first and second positions. The supporting rails may be located beneath and engage with bottom edges of the first and second barriers, and may be configured to support the weight of the gate arrangement 500. Additionally, the supporting rails may restrict movement of the barriers in the Y direction, thereby providing additional structural rigidity to the barriers. In other words, the supporting rails may include a groove aligned with the X direction which engages with the bottom edge of the barrier, thus limiting lateral movement, i.e. in the Y direction, whilst facilitating movement in the X direction (the direction in which the gate moves between the first and second positions). The supporting rails may be mounted on respective pillars or supports.

Additionally or alternatively, the gate arrangement may comprise one or more wheels oriented in the X direction to facilitate movement of the gate 500 between the first and second positions. The wheels maybe mounted on the secondary connecting portion 526 at a bottom, or may be mounted near to a bottom edge of the first and/or second barriers 502, 504, and may engage with a corresponding rails, tracks or groove that are fixed in place (so that the gate arrangement moves relative to the rails/tracks/grooves) and that are oriented along the X direction, i.e. the direction of movement of the gate arrangement. The wheels may be idle (i.e. not connected to a transmission or drive system) such that the wheels guide movement of the gate 500. Alternatively, the wheels may be connected to a drive system as described below such that the wheels are driven to cause the gate 500 to move between the first and second positions.

In some embodiments, the gate arrangement 500 may further comprise a drive mechanism (now shown) configured to drive movement of the gate 500 between the first and the second positions. The drive mechanism may be housed within the gate 500 itself or may be a separate system that is connectable to the gate arrangement. The drive mechanism may be any suitable system configured to cause linear and reciprocating movement of the gate between the first and the second positions, which are separated from each other along the X direction. In one example, the drive mechanism may comprise a motor connected to a pulley system, worm wheel, or a rack and pinion. In general, the drive system may be any suitable means for causing the gate 500 to move between the first and second positions. The gate arrangement may further comprise a controller configured to control the drive system so as to control the movement and positioning of the gate arrangement 500.

Referring again to Fig. 5B, there is shown one or more sidewalls 530 that lie generally in a Y-Z plane and which are located in the internal space of the gate 500. The sidewalls are arranged to be generally parallel to the rails of the connecting rail system 520, and thus are generally parallel to the travel path of a robotic vehicle 202, 204 across the connecting rail system. The sidewalls are spaced apart in the X direction to allow a robotic vehicle to be received in the internal space in between the sidewalls. In other words, any robotic vehicle 202, 204 received in the internal space (either via the first opening 512 or the second opening 514) is received in between the sidewalls 530, which are fixed in place relative to the connecting rail system.

In more detail, the one or more sidewalls 530 are fixed in place such that the gate arrangement moves in the X direction relative to the sidewalls. This means that, from a reference frame fixed to the gate arrangement 500, the sidewalls are arranged to move inside the internal space in the +/-X direction (due to the gate moving relative to the fixed sidewalls). In the embodiment illustrated in Fig. 5B, the one or more sidewalls are fixed to the connecting rail system 520 (e.g. one sidewall connected to each rail 520a, 520b), however in other embodiments, the sidewalls may be mounted elsewhere, such as mounted to a ground beneath the gate arrangement.

The height (in the Z direction) and depth (in the Y direction) may substantially correspond to the height and depth of the internal space. For example, the height and depth of the sidewalls may be 50mm or less, optionally 20mm or less, preferably 10mm or less than the corresponding dimensions of the internal space. For example, the internal space may have a height of 900mm, and the sidewalls 530 may have a corresponding height that is slightly less than the height of the internal space, such as between 850 and 890mm, to allow the gate arrangement to move relative to the sidewalls. The specific arrangement of the sidewalls within the internal space is configured to prevent access from one area (e.g. the second area) to the other area (e.g. the first area) by a service personnel or any other person located in either area. In some examples, the second area is a service area where service personnel can service or repair robotic vehicles. To prevent such personnel located in the second area from being able to pass through the gate arrangement and into the first area, which could be potentially dangerous due to numerous robotic vehicles moving autonomously across the first area, the sidewalls are so located within the internal space of the gate to act as a further lateral barrier to prevent any human from passing laterally through the gate arrangement. In other words, the sidewalls prevent any lateral movement (in direction +/- X direction inside the internal space, meaning that any object entering the internal space can only exit on the other side of the gate arrangement if the gate arrangement switches position. In other words, when the gate arrangement is stationary, the sidewalls prevent any object from being able to enter the gate arrangement through one opening and exit through the other opening.

### Gate arrangement - first position

Referring now to Fig. 6A, a plan or birds-eye view of a system 650 according to the present disclosure is shown. The system 650 comprises a gate arrangement 600, which may be similar or identical to gate arrangement 500 shown in Fig. 5A or Fig. 5B. In particular, gate arrangement 600 comprises an internal space 608, a first barrier 602, second barrier 604 and a top connecting portion 606 (indicated by the shaded area between the first barrier 602 and the second barrier 604) connecting the first and second barrier 602, 604 such that the first and second barriers are rigidly connected to form a single rigid body. In the embodiment shown, the gate 600 further comprises two sidewalls 630, which are similar or identical in structure and function to sidewalls 530 described above with reference to Fig. 5B. The gate may further comprise a secondary connecting portion arranged underneath the barriers, similar to connecting bar 526 described above and shown in Fig. 5B. In the embodiment shown the gate also further comprises first and second lateral sides 616 and 618 which are rigidly connected to or integrally formed with the first and second barriers to provide improved structural rigidity.

The system further comprises a first area 652 including a respective first rail system 662, and a second area 654 including a respective second rail system 664. The first and second rail systems are connected by a connecting rail system 620. The first, second and connecting rail systems are arranged to facilitate movement of a robotic container-handling vehicle (robotic vehicle) 202, 204 across the first area 652, second area 654 and in between the first and second areas respectively. The first area 652 may be a storage system as described above in relation to Fig. 1. The second area 654 may be a servicing area which is separate to the first area 652, but is connected to the first area via the connecting rail system 620 so that robotic vehicles 202, 204 operating in the first area 652 (e.g. in the grid or storage area) can travel to the second area 654 for servicing and maintenance. In some examples, the robotic vehicles 202, 204 themselves are not part of the system 650, but the robotic vehicles move along and in between the rail systems 620, 662, 664 of the system 650.

As shown in Fig. 6A, the gate 600 is arranged in between the first area 652 and the second area 654, and is arranged above the connecting rail system 620 (in a similar or identical manner to the relative arrangement of gate 500 and connecting rail system 520 as shown in Fig. 5A and Fig. 5B). The gate 600 is so arranged to control passage of a robotic vehicle 202, 204 over the connecting rail system 620 in between the first area 652 and the second area 654. In more detail, the gate is configured to move in the X direction, i.e. horizontally and in a direction perpendicular to the direction of travel of the robotic vehicles over the connecting rail system 620, in between a first position (shown in Fig. 6A) and a second position (shown in Fig. 6B and described in more detail below).

In the first position, as shown in Fig. 6A, the gate 600 is positioned in between the first area 652 and the second 654 in such a way that a robotic vehicle 202, 204 may freely move between the internal space 608 and the first area 652. This is because when the gate is in the first position, the first barrier 602 is arranged horizontally (i.e. in the X direction) outside of a vehicle path (defined by the rails of the connecting rail system 620) between the internal space 608 and the first area 652, while the first opening 612 (adjacent to the first barrier 602) is arranged in line with the vehicle path, thereby allowing passage of a robotic vehicle 202, 204 through the first opening 612, between the internal space 608 and the first area 652.

At the same time, while the gate 600 is in the first position, the second barrier 604 is arranged along a vehicle path between the second area and the internal space, thereby obstructing passage of a robotic container handling-vehicle between the second area and the internal space. Fig. 6A shows that in the first position, the second opening 614 (adjacent to the second barrier 604) is horizontally outside of the vehicle path between the internal space and the second area.

As described above, a robotic vehicle 202, 204 can freely move between the first area 652 and the internal space 608 of the gate 600 when the gate 600 is arranged in the first position. The movement of a robotic vehicle 202, 204 from the first area 652 to the internal space 608 is illustrated in Fig. 6A. The solid line robotic vehicle 202, 204 indicates a position of the robotic vehicle in the first area, which then moves in the direction indicated by the solid arrow into the internal space 608 and in between fixed the sidewalls 630. The final position of the robotic vehicle 202, 204 is indicated by the dashed outline in Fig. 6B. The robotic vehicle cannot travel any further in the direction indicated by the solid arrow, since the second barrier 604 is obstructing a path between the internal space and the second area 654.

It would be appreciated that a robotic vehicle 202, 204 may move in the reverse direction when the gate 600 is in the first position, i.e. from the internal space 608 to the first area 652.

In order for the robotic vehicle to continue its passage from the first area 652 to the second are 654, the gate arrangement comprising the first barrier 602 and second barrier 604 must move in the direction indicated by the dashed arrow to the second position, which is described in more detail below with reference to Fig. 6B.

### Gate arrangement - second position

Referring now to Fig. 6B, the system 650 is shown with the gate arrangement 600 arranged in the second position. In other words, the gate arrangement 600 has moved in the -X direction (in this particular example, in other examples the first and second position may be swapped around) from the first position to the second position, such that the robotic vehicle 202, 204 located in the internal space 608 of the gate 600 is able to freely move between the internal space and the second area. This is because the gate is now in the second position in which the second barrier 604 is arranged horizontally (i.e. along the X direction) outside of a vehicle path (defined by the rails of the connecting rail system 620) between the internal space 608 and the second area 654, while the second opening 614 (adjacent to the second barrier 604) is arranged in line with the vehicle path, thereby allowing passage of a robotic vehicle 202, 204 through the second opening and between the internal space 608 and the second area 654.

At the same time, while the gate 600 is in the second position, the first barrier 602 is arranged along a vehicle path between the first area 652 and the internal space 608, thereby obstructing passage of a robotic container handling-vehicle between the first area and the internal space. Fig. 6B shows that in the second position of the gate 600, the first opening 612 (adjacent to the first barrier 602) is horizontally outside of the vehicle path between the internal space and the first area.

Therefore, as shown from the solid arrow in Fig. 6A, a robotic vehicle can freely move between the internal space 608 and the second area 654 when the gate 600 is arranged in the second position. However, in this position, a robotic vehicle located in the internal space cannot travel back to the first area, since the first barrier 602 obstructs the path between the internal space 608 and the first area 652.

It would be appreciated that a robotic vehicle 202, 204 may move in the reverse direction when the gate 600 is in the second position, i.e. from the second area 654 to the internal space. For a robotic vehicle 202, 204 to pass from the second area 654 to the first area 652, the robotic vehicle must first be received in the internal space 608 while the gate is arranged in the second position, before the gate moves to the first position to allow the robotic vehicle to pass from the internal space to the first area.

### Alternative gate arrangement

Referring now to Fig. 7, a system comprising an alternative gate arrangement 700 is depicted. As with the other embodiments, the gate 700 is arranged in between a first area 752 and a second area 754 to control and guide passage of a robotic vehicle (202,. 204) between the first and second areas via a connecting rail system 720. However, in this embodiment, the gate 700 does not move between a first and second position in between the first and second areas and is instead fixed relative to the first area 752, second area 754, and the connecting rail system 720, at least a portion of which is located inside the internal space 708 of the gate 700.

The gate 700 comprises a first barrier 702 and a second barrier 704 to obstruct a path of the robotic vehicle, by prevent a robotic vehicle from travelling in a straight line directly in between the first and the second area. Thus, instead of the gate 700 moving in order to control and facilitate passage of a robotic vehicle (as with the other disclosed embodiments), in this embodiment, the gate 700 remains stationary whilst the direction of travel of the robotic vehicle changes as the robotic vehicle passes through the gate. The path of a robotic vehicle through the gate is indicated by the dashed arrow in Fig 7, which indicates that the robot switches from travelling in the +/-Y direction to the +/- X direction (depending on whether the robot is travelling to or from the second area) whilst inside the internal space of the gate. The barriers 702 and 704 are located at the sides of the gate where the robotic vehicle changes direction, so as to provide additional structural rigidity at those locations in the event that a robotic vehicle becomes derailed as it changes its direction of travel.

### Method of Operation

Referring now to Fig. 8, a method of controlling passage of a robotic container-handling vehicle between a first area (e.g. a storage area) and a second area (e.g. a service area) comprises a first step 801 of arranging a gate (e.g. gate 500 or gate 600 as described above) in a first position so as to allow a robotic vehicle to move from the first area to the internal space of the gate. Arranging the gate in the first position may involve determining, using a controller, whether the gate is already arranged in the first position. If the gate is determined to be in the first position, then the method 800 may move to the next step 802. If the gate is determined to be in the second position or any other intermediate position between the first position and the second position, the step may involve controlling a drive system connected to the gate which causes the gate to move to the first position.

After step 801, the method 800 moves to step 802 in which a robotic vehicle (202, 204) is moved from the first area to the internal space of the gate. Step 802 is carried out whilst the gate remains in the first position (after being arranged there at step 801). Moving the robotic vehicle to the internal space from the first area may involve controlling, using a controller, onboard motors on the robotic vehicle to drive wheels of the robotic vehicle to cause it to move to the internal space.

After step 802, the method 800 moves to step 803, in which the gate is arranged in the second position once the robotic vehicle has moved into the internal space at step 802. Similar to step 801, step 803 may involve controlling a drive system connected to the gate which causes the gate to move to the second position. In other words, step 803 involves causing the gate to move in a generally horizontal direction perpendicular to the direction of travel of the robotic vehicle to the second position, so as to allow a robotic vehicle to move from the internal space of the gate to the second area.

After step 803, the method moves to step 804 in which the robotic vehicle currently located within the internal space of the gate moves out of the internal space of the gate and into the second area. Step 804 is carried out whilst the gate remains in the second position (after moving to the second position at step 803). Moving the robotic vehicle from the internal space to the second area may involve controlling, using a controller, onboard motors on the robotic vehicle to drive wheels of the robotic vehicle to cause it to move in the direction from the internal space to the second area.

Whilst the method described above refers to passage of a robotic vehicle from a first area (e.g. a storage area) to a second area (e.g. a service area), it would be appreciated that the method can be reversed to enable passage of a robotic vehicle from the second area to the first area (e.g. returning a robotic vehicle to the storage area after it has been serviced).

### Penultimate comments

While the gate arrangement and system comprising the gate arrangement have been illustrated and described in the context of an "internal cavity"-type robotic vehicle that spans a single grid cell, it would be appreciated that the aspects and embodiments described herein can be used in conjunction more generally with any type of robotic-container handling vehicle of any size. For example, a gate arrangement may be configured to accommodate a cantilever-type robotic container-handling vehicle that spans two grid cells, or any other type of robotic container-handling vehicle that spans one or more cells of the grid. It would be appreciated that the dimensions of the components of the gate arrangement, in particular the internal space and first and second barriers, can be adapted according to the size of the robotic container-handling vehicle that the gate arrangement is configured to control the passage of. In other words, aspects and embodiments of the present disclosure are not limited to one particular type of robotic container-handling vehicle, but may be used with any shape or size robotic vehicle, with the dimensions of the gate arrangement and system as a whole adjusted accordingly.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A gate arrangement for controlling passage of a robotic container-handling vehicle between a first area and a second area, wherein the gate is configured to move between a first position and a second position when the gate arrangement is arranged in between the first area and the second area, the gate arrangement comprising:
an internal space for accommodating a robotic container-handling vehicle;
a first barrier configured to obstruct passage of a robotic container-handling vehicle between the internal space and the first area when the gate arrangement is arranged in the second position; and
a second barrier configured to prevent passage of a robotic container-handling vehicle between internal space and the second area when the gate arrangement is arranged in the first position;
wherein the first and second barrier are rigidly connected so as to form a rigid body.

2. A gate arrangement according to claim 1, further comprising one or more connecting portions rigidly connected between the first barrier and second barrier such that the first barrier, second barrier and one or more connecting portions form a single rigid body.

3. A gate arrangement according to any preceding claim, wherein the first barrier and second barrier are offset relative to each other such that:
when the gate arrangement is arranged in the second position:
the first barrier arranged to be located along a vehicle path between the first area and the internal space, thereby obstructing passage of a robotic container-handling vehicle between the first area and the internal space; and
the second barrier is arranged to be located horizontally outside of a vehicle path between the internal space and the second area, thereby allowing passage of a robotic container-handling vehicle between the internal space and the second area; and
when the gate arrangement is arranged in the first position:
the second barrier is arranged to be located along a vehicle path between the second area and the internal space, thereby obstructing passage of a robotic container handling-vehicle between the second area and the internal space; and
the first barrier is arranged to be located horizontally outside of a vehicle path between the internal space and the first area, thereby allowing passage of a robotic container-handling vehicle between the internal space and the first area.

4. A gate arrangement according to any preceding claim, further comprising:
a first opening arranged to allow passage of a robotic container-handling vehicle between the first area and the internal space when the gate arrangement is arranged in the first position; and
a second opening arranged to allow passage of a robotic container-handling vehicle between the second area and the internal space when the gate arrangement is configured in the second position;
wherein the first opening is arranged horizontally adjacent to the first barrier and the second opening is arranged horizontally adjacent to the second barrier.

5. A gate arrangement according to any preceding claim, wherein when the gate arrangement is arranged between the first area and the second area, the gate is configured to move in a generally horizontal direction between the first position and the second position

6. A gate arrangement according to claim 5, wherein the direction of movement of the gate arrangement is generally perpendicular to the direction of travel of a robotic vehicle between the first area and the second area.

7. A gate arrangement according to any preceding claim, further comprising a drive mechanism configured to cause the gate arrangement to move between the first and second positions when the gate arrangement is arranged between the first area and the second area.

8. A gate arrangement according to claim 7, further comprising a control system configured to control the drive mechanism of the gate arrangement to control movement of the gate arrangement between the first and second positions when the gate arrangement is arranged between the first area and the second area.

9. A gate arrangement according to any preceding claim, further comprising one or more wheels arranged to facilitate movement of the gate arrangement between the first and second positions.

10. An automated storage and retrieval system comprising:
a first area comprising a first rail system arranged to guide movement of robotic container-handling vehicles across the first area;
a second area comprising a second rail system arranged to guide movement of robotic container-handling vehicles across the second area;
a connecting rail system comprising one or more rails connected between the first rail system and the second rail system to facilitate passage of robotic container-handling vehicles between the first area and the second area; and
a gate arrangement according to any preceding claim arranged between the first area and second area and configured to control passage of robotic container-handling vehicles across the connecting rail system.

11. The system of claim 10, wherein the internal space of the gate arrangement is arranged generally above the connecting rail system such that a robotic handling vehicle travelling along the rail system may be accommodated within the internal space, wherein:
when the gate arrangement is arranged in the second position, the first barrier is positioned over the connecting rail system to prevent passage of a robotic container handling vehicle between the first area and the internal space; and
when the gate arrangement is arranged in the first position, the second barrier is positioned over the connecting rail system to prevent passage of a robotic container handling vehicle between the second area and the internal space.

12. A system according to claim 10 or 11, wherein the gate arrangement comprises:
a first connecting portion rigidly connected between the first barrier and the second barrier, wherein the first connecting portion is located generally above the connecting rail system, and optionally further comprises:
a second connecting portion rigidly connected between the first and second barrier, wherein the secondary connecting portion is located generally located beneath the connecting rail system.

13. A system according to any of claims 10 to 12, wherein the system comprises one or more walls located within the internal space of the gate arrangement and generally parallel to the one or more rails of the connecting rail system, wherein the height of the one or more sidewalls substantially corresponds to the height of the internal space of the gate arrangement.

14. A method of controlling passage of a robotic container-handling vehicle between a first area and a second area of a system according to any of claims 10 to 13, the method comprising;
causing the gate arrangement to be arranged in the first position to allow a robotic container-handling vehicle to move between the first area and the internal space of the gate arrangement;
whilst the gate arrangement remains in the first position; causing a robotic container-handling vehicle located in the first area to move into the internal space of the gate arrangement;
causing the gate arrangement to move in a generally horizontal direction perpendicular to the direction of travel of the robotic container-handling vehicle to the second position to allow the robotic container-handling vehicle located within the internal space to move to the second area;
whilst the gate arrangement remains in the second position; causing the robotic container-handling vehicle located in the internal space to move into the second area.

15. A computer-readable medium carrying instructions that, when executed by one or more processors, cause the one or more processors to carry out the method of claim 14.
